# EUROPÄISCHE PATENTSCHRIFT

(11) **EP 2 920 042 B1**
(45) Veröffentlichungstag und Bekanntmachung des Hinweises auf die Patenterteilung: **28.12.2016**
(21) Anmeldenummer: 13785358.6
(22) Anmeldetag: 30.10.2013
(51) Int. Cl.: B62D 5/00, B62D 15/02

(54) **SPURHALTEASSISTENT FÜR EIN KRAFTFAHRZEUG UND VERFAHREN ZUM BETREIBEN EINES SPURHALTEASSISTENTEN**
LANE KEEPING ASSISTANT FOR A VEHICLE AND METHOD TO OPERATE A LANE KEEPING ASSISTANT
ASSISTANT DE SUIVI DE VOIE POUR UN VEHICULE ET METHODE POUR METTRE EN OEUVRE UN ASSISTANT DE SUIVI DE VOIE

(30) Priorität: 15.11.2012 DE 102012022387
(43) Veröffentlichungstag der Anmeldung: 23.09.2015
(73) Patentinhaber: Audi AG, 85045 Ingolstadt (DE)
(72) Erfinder: MÜLLER, Christoph, 97723 Oberthulba (DE)
(74) Vertreter: Engelhardt, Harald
(86) Internationale Anmeldenummer: PCT/EP2013/003271
(87) Internationale Veröffentlichungsnummer: WO 2014/075766

(56) Entgegenhaltungen:
- EP-A1- 2 193 977
- EP-A1- 2 495 156
- JP-A- 2008 189 058
- US-A1- 2010 025 144
- US-A1- 2012 203 431

## Beschreibung

Die Erfindung betrifft einen Spurhalteassistent für ein Kraftfahrzeug, der aktivierbar und deaktivierbar ist und mittels einer Überlagerungslenkung einen Lenkeingriff an einer Achse ermöglicht.

Spurhalteassistenten gehören zu den aktiven Lenksystemen von Kraftfahrzeugen, bei denen ein mechatronisches System vorgesehen ist, um den Lenkwinkel der gelenkten Räder einzustellen.

Spurhalteassistenten unterstützen den Fahrer, indem sie im aktivierten Zustand die Querführung des Fahrzeugs übernehmen. Über einen oder mehrere optische Sensoren wird das Umfeld des Fahrzeugs wahrgenommen, der Spurhalteassistent führt das Fahrzeug innerhalb eines bestimmten Fahrschlauchs, der basierend auf der Umfeldwahrnehmung festgelegt wurde. Der Fahrschlauch ist ein Bereich innerhalb einer Fahrspur.

Für die Funktion des Spurhalteassistenten ist die Kenntnis des zukünftigen Fahrwegs (Trajektorie) des Fahrzeugs erforderlich. Die Information über den zukünftigen Fahrweg wäre auch für andere Fahrerassistenzsysteme nützlich. Bisher wird der zukünftige Fahrweg basierend auf dem aktuellen Lenkradwinkel prädiziert. Bei hohen Geschwindigkeiten, z. B. bei einer Autobahnfahrt, ist der für einen großen Kurvenradius benötigte Lenkwinkel sehr klein. Zudem führt der Fahrer stets eine zittrige, ruckelnde Lenkbewegung aus, welche das eigentlich benötigte Lenkwinkelsignal überlagert. Diese Störeinflüsse, die keinen signifikanten Anteil an der zukünftigen Trajektorie besitzen, liegen in derselben Größenordnung wie das für die Bestimmung des Trajektorienverlaufs benötigte Lenkradwinkelsignal. Selbst bei hoher Auflösung des Lenkwinkelsensors ergibt sich ein außerordentlich schlechtes Signal/Rausch-Verhältnis, anhand dessen sich keine stabile und präzise Trajektorie prädizieren lässt.

Die JP 2008 189058 A ist als nächstliegender Stand der Technik nach dem Oberbegriff des Anspruchs 1 zu sehen und zeigt einen Spurhalteassistent für ein Kraftfahrzeug, der aktivierbar und deaktivierbar ist und mittels einer Überlagerungslenkung einen Lenkeingriff an einer Achse ermöglicht.

Die EP 2 193 977 A1 beschreibt einen Spurhalteassistent für ein Kraftfahrzeug, der mittels einer Überlagerungslenkung einen Lenkeingriff an einer Achse ermöglicht, wobei der Spurhalteassistent dazu ausgebildet ist, im aktivierten Zustand das Übersetzungsverhältnis der Überlagerungslenkung zu verringern.

Der Erfindung liegt daher die Aufgabe zugrunde, einen Spurhalteassistent anzugeben, der eine genauere Bestimmung des aktuellen Lenkradwinkels ermöglicht.

Zur Lösung dieser Aufgabe ist bei einem Spurhalteassistent der eingangs genannten Art erfindungsgemäß vorgesehen, dass er dazu ausgebildet ist, im aktivierten Zustand das Übersetzungsverhältnis der Überlagerungslenkung um einen Faktor zwischen 5 und 15 zu verringern.

Durch die Änderung des Übersetzungsverhältnisses wird die Lenkung um einen beträchtlichen Wert bzw. Faktor indirekter, das heißt ein größerer Lenkradausschlag ist erforderlich, um dieselbe Lenkwinkeländerung der gelenkten Räder im Vergleich zum deaktivierten Zustand des Spurhalteassistenten zu bewirken. Da der erfasste Lenkradwinkel, das heißt das gesuchte Lenkradwinkelsignal, durch das geänderte Übersetzungsverhältnis signifikant geändert wurde, können vom Fahrer erzeugte Störeinflüsse keinen nennenswerten Einfluss auf das Lenkradwinkelsignal nehmen. Dementsprechend kann bei aktiviertem Spurhalteassistent eine exakte Bestimmung der zukünftigen Trajektorie erfolgen.

Eine wesentliche Voraussetzung für die genaue Bestimmung des aktuellen Lenkradwinkels ist, dass der Spurhalteassistent aktiviert ist. Nur bei aktiviertem Spurhalteassistent wird die Querführung überwiegend von diesem übernommen, der Spurhalteassistent führt das Fahrzeug dann innerhalb eines bestimmten Bereich innerhalb der Fahrspur. Lenkeingriffe des Fahrers sind bei aktiviertem Spurhalteassistent praktisch nicht erforderlich, derartige Lenkeingriffe stellen lediglich eine "Feinkorrektur" der automatischen Führung dar. Zudem ist ein Spurhalteassistent nur im Komfortbereich aktiviert, weshalb eine Änderung des Übersetzungsverhältnisses der Überlagerungslenkung unkritisch hinsichtlich Fahrverhalten, Fahrdynamik und Grenzbereichstabilität ist. Innerhalb des angegebenen Bereichs für das Übersetzungsverhältnis wird es bevorzugt, dass das Übersetzungsverhältnis im aktivierten Zustand näherungsweise um den Faktor 10 verringerbar ist. Dementsprechend ergibt sich ein um das zehnfache vergrößerter Wert für das Lenkradwinkelsignal, so dass vom Fahrer erzeugte Störeinflüsse diesen Wert nicht mehr signifikant beeinflussen können. Das Lenkradwinkelsignal kann auf diese Weise mit höherer Qualität erfasst werden.

Der erfindungsgemäße Spurhalteassistent kann dazu ausgebildet sein, das Übersetzungsverhältnis der Überlagerungslenkung im deaktivierten Zustand auf einen Ausgangswert zu erhöhen. Vorzugsweise wird das Übersetzungsverhältnis wieder auf den ursprünglichen Wert zurückgesetzt, der bei deaktiviertem Spurhalteassistent wirksam ist. Das Übersetzungsverhältnis kann beispielsweise im deaktivierten Zustand dem Faktor 1 entsprechen, das heißt es liegt eine "normale" Übersetzung zwischen Lenkradwinkel und Radwinkel vor, die im Rahmen der Fahrzeugentwicklung festgelegt wird. Beim Aktivieren des Spurhalteassistenten wird dieser Normalwert um einen Faktor zwischen 5 und 15, vorzugsweise 10, verringert, dementsprechend ist z. B. ein zehnfach größerer Lenkradeinschlag im Vergleich zum deaktivierten Zustand des Spurhalteassistenten erforderlich, um denselben Radeinschlag zu erzeugen,. Beim Deaktivieren des Spurhalteassistenten wird das Übersetzungsverhältnis wieder auf den Ausgangswert, der z. B. den Wert 1 aufweisen kann, erhöht.

Erfindungsgemäß wird es besonders bevorzugt, dass der Lenkradwinkel als Eingangsgröße für die Prädiktion des Fahrwegs des Kraftfahrzeugs zur Verfügung steht. Die Information über den zukünftigen Fahrweg kann für weitere Fahrerassistenzsysteme genutzt werden.

Daneben betrifft die Erfindung ein Verfahren zum Betreiben eines Spurhalteassistenten für ein Kraftfahrzeug, der aktivierbar und deaktivierbar ist und mittels einer Überlagerungslenkung einen Lenkeingriff an einer Achse ermöglicht.

Das erfindungsgemäße Verfahren zeichnet sich dadurch aus, dass der Spurhalteassistent im aktivierten Zustand das Übersetzungsverhältnis der Überlagerungslenkung um einen Faktor zwischen 5 und 15 verringert.

In den Unteransprüchen sind weitere Ausgestaltungen der Erfindung beschrieben.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellung und zeigen:
- Fig. 1: ein Fahrzeug auf einem Fahrweg und zugehörige Lenkwinkel bei deaktiviertem Spurhalteassistenten; und
- Fig. 2: das Fahrzeug auf dem Fahrweg und zugehörige Lenkwinkel bei aktiviertem erfindungsgemäßen Spurhalteassistenten.

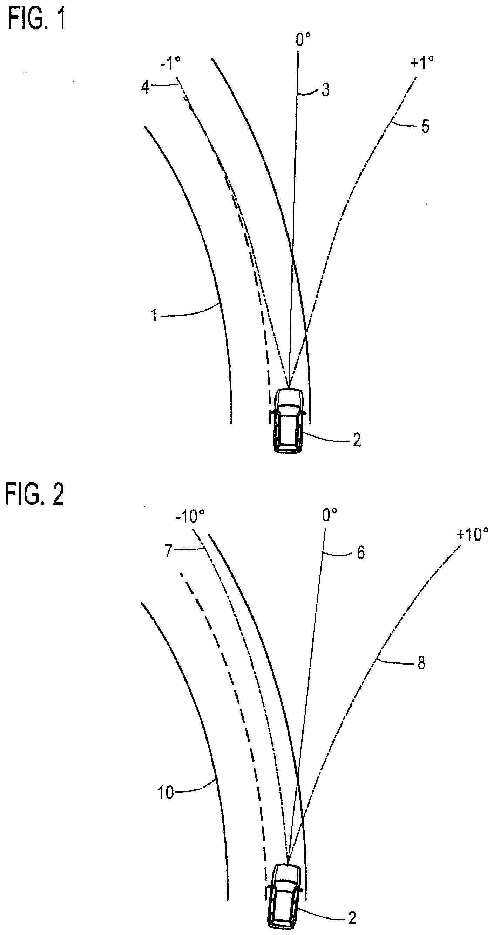

Fig. 1 ist eine schematische Draufsicht und zeigt einen Fahrweg 1, bei dem sich ein Fahrzeug 2 entlang der rechten Fahrbahn bewegt. Eine in Längsrichtung verlaufende Gerade 3 gibt die Trajektorie für den Fall an, wenn der Lenkwinkel 0° beträgt. In dem in Fig. 1 gezeigten Zustand ist der Spurhalteassistent des Fahrzeugs 2 deaktiviert.

Links von der Geraden 3 ist eine Trajektorie 4 für den Lenkwinkel -1° dargestellt. Rechts von der Gerade 3 ist eine Trajektorie 5 für den Lenkwinkel +1° gezeigt.

In Fig. 1 ist erkennbar, dass bereits eine relativ geringe Änderung des Lenkwinkels um 1° oder 2° zu einer beträchtlichen Ungenauigkeit hinsichtlich des zukünftigen Fahrwegs führt. Zudem wird das Lenkwinkelsignal von Lenkbewegungen des Fahrers überlagert, bedingt durch diese Störeinflüsse ist eine präzise Prädiktion der Trajektorie nicht möglich.

Fig. 2 zeigt das Fahrzeug 2 auf dem Fahrweg 1 bei aktiviertem Spurhalteassistent. Die Information über die Aktivierung des Spurhalteassistenten wird der Überlagerungslenkung des Fahrzeugs 2 übermittelt. Bei aktiviertem Spurhalteassistent wird die Querführung des Fahrzeugs 2 weit überwiegend von dem Spurhalteassistenten übernommen. Da der Spurhalteassistent aktiviert worden ist, verändert die Überlagerungslenkung, die auch als Dynamiklenkung bezeichnet wird, das Übersetzungsverhältnis um den Faktor 10, wobei die Übersetzung verringert wird. Diese Anpassung der Übersetzung führt dazu, dass nicht wie bisher ein Lenkradausschlag von +1° oder -1° zur Fahrzeugbewegung innerhalb eines bestimmten Fahrschlauchs (ein Bereich innerhalb der Fahrspur) führt, stattdessen ist nun, bei aktiviertem Spurhalteassistent ein Lenkradwinkel bzw. eine Änderung des Lenkradwinkels um +10° oder -10° erforderlich, um dieselbe Fahrzeugbewegung auszulösen. Dementsprechend vergrößert sich der Wert des Lenkradwinkelsignals im Verhältnis zu Störeinflüssen, wodurch sich ein gutes Signal/Rausch-Verhältnis ergibt. Die Trajektorie des Fahrzeugs 2 kann in diesem Ausführungsbeispiel zehnmal exakter und stabiler im Vergleich zu dem in Fig. 1 gezeigten Zustand bestimmt werden.

Fahrdynamisch ist die Änderung des Übersetzungsverhältnisses unkritisch, da das Fahrzeug 2 von dem aktivierten Spurhalteassistenten stets innerhalb des festgelegten Bereichs innerhalb der Fahrspur geführt wird. Die Lenkbewegungen des Fahrers dienen somit dazu, eine fein aufgelöste Trajektorie innerhalb des Schlauches zu prädizieren.

In Fig. 2 ist in Übereinstimmung mit der Darstellung von Fig. 1 eine in Längsrichtung des Fahrzeugs verlaufende Gerade 6 gezeigt, die einem Lenkwinkel von 0° entspricht. Zusätzlich sind links und rechts von der Gerade 6 Trajektorien 7, 8 gezeigt, die dem Lenkwinkel -10° bzw. +10° entsprechen. Der von den beiden Trajektorien 7, 8 eingeschlossene Bereich ist näherungsweise gleich groß wie der von den Trajektorien 4, 5 in Fig. 1 eingeschlossene Bereich. Durch die Verringerung des Übersetzungsverhältnis der Überlagerungslenkung kann der zukünftige Fahrweg jedoch wesentlich genauer prädiziert werden.

Bisher wurde vereinfachend angenommen, dass der zukünftige Verlauf einer Trajektorie dem Verlauf von Spurmarkierungen auf der Fahrbahn entspricht. Vom Fahrer verursachte Abweichungen von diesem Verlauf, z. B. durch das Schneiden einer Kurve, konnten nur schwer berücksichtigt werden, da das auf herkömmliche Weise erfasste Signal des aktuellen Lenkradwinkels ein zu schlechtes Signal/Rausch-Verhältnis hatte. Die Verringerung der Lenkübersetzung ermöglicht nun, die vom Fahrer gewünschte Trajektorie innerhalb des vom aktiven Spurhalteassistenten ermittelten Fahrschlauchs exakt und stabil zu bestimmen. Dieser vom Fahrer gewünschte Trajektorienverlauf kann verschiedenen, weiteren Funktionen zur Verfügung gestellt werden. Beispielsweise ist es für die Funktion "querkraftfreies Fahren" erforderlich, den zukünftigen Verlauf der Querbeschleunigung anhand der vom Fahrer gewählten Trajektorie zu ermitteln. Ein schlechtes Signal/Rausch-Verhältnis des Lenkradwinkelsignals führt zu einem "zappeligen" Verlauf der Querbeschleunigung, erst durch die Änderung des Übersetzungsverhältnisses der Überlagerungslenkung wird das Lenkradwinkelsignal für diese Funktion brauchbar.

Die Änderung des Übersetzungsverhältnisses wird beim Aktivieren des Spurhalteassistenten eingeschaltet, beim Deaktivieren des Spurhalteassistenten wird das Übersetzungsverhältnis wieder auf einen Ausgangswert bzw. auf ein normales Niveau zurückgesetzt. Zusätzliche Hardwarekomponenten sind nicht erforderlich.

## Patentansprüche

1. Spurhalteassistent für ein Kraftfahrzeug, der aktivierbar und deaktivierbar ist und mittels einer Überlagerungslenkung einen Lenkeingriff an einer Achse ermöglicht,
**dadurch gekennzeichnet,**
**dass** der Spurhalteassistent dazu ausgebildet ist, im aktivierten Zustand das Übersetzungsverhältnis der Überlagerungslenkung um einen Faktor zwischen 5 und 15 zu verringern.

2. Spurhalteassistent nach Anspruch 1,
**dadurch gekennzeichnet,**
**dass** das Übersetzungsverhältnis der Überlagerungslenkung im aktivierten Zustand näherungsweise um den Faktor 10 verringerbar ist.

3. Spurhalteassistent nach Anspruch 1 oder 2,
**dadurch gekennzeichnet,**
**dass** er dazu ausgebildet ist, das Übersetzungsverhältnis der Überlagerungslenkung im deaktivierten Zustand auf einen Ausgangswert zu erhöhen.

4. Spurhalteassistent nach einem der vorangehenden Ansprüche,
**dadurch gekennzeichnet,**
**dass** der Lenkradwinkel als Eingangsgröße für die Prädiktion des Fahrwegs des Kraftfahrzeugs zur Verfügung steht.

5. Verfahren zum Betreiben eines Spurhalteassistenten für ein Kraftfahrzeug, der aktivierbar und deaktivierbar ist und mittels einer Überlagerungslenkung einen Lenkeingriff an einer Achse ermöglicht,
**dadurch gekennzeichnet,**
**dass** der Spurhalteassistent im aktivierten Zustand das Übersetzungsverhältnis der Überlagerungslenkung um einen Faktor zwischen 5 und 15 verringert.

6. Verfahren nach Anspruch 5,
**dadurch gekennzeichnet,**
**dass** das Übersetzungsverhältnis der Überlagerungslenkung im aktivierten Zustand näherungsweise um den Faktor 10 verringert wird.

7. Verfahren nach Anspruch 5 oder 6,
**dadurch gekennzeichnet,**
**dass** das Übersetzungsverhältnis der Überlagerungslenkung im deaktivierten Zustand auf einen Ausgangswert vergrößert wird.

8. Verfahren nach einem der Ansprüche 5 bis 7,
**dadurch gekennzeichnet,**
**dass** der Lenkradwinkel als Eingangsgröße für die Prädiktion des Fahrwegs des Kraftfahrzeugs verwendet wird.

## Claims

1. Lane-keeping assist system for a motor vehicle, which can be activated and deactivated and which enables a steering intervention on an axle by means of a superimposed steering system,
**characterized in that**
the lane-keeping assist system is configured to reduce, when activated, the translation ratio of the superimposed steering system by a factor of between 5 and 15.

2. Lane-keeping assist system according to claim 1,
**characterized in that**
the translation ratio of the superimposed steering system, when activated, can be reduced by approximately the factor of 10.

3. Lane-keeping assist system according to claim 1 or 2,
**characterized in that**
same is configured to increase, when deactivated, the translation ratio of the superimposed steering system to an initial value.

4. Lane-keeping assist system according to any of the preceding claims, **characterized in that**
the steering wheel angle is available as an input variable for the prediction of the travel path of the motor vehicle.

5. Method for operating a lane-keeping assist system for a motor vehicle, which can be activated and deactivated and which enables a steering intervention on an axle by means of a superimposed steering system,
**characterized in that**
the lane-keeping assist system reduces, when activated, the translation ratio of the superimposed steering system by a factor of between 5 and 15.

6. Method according to claim 5,
**characterized in that**
the translation ratio of the superimposed steering system, when activated, is reduced by approximately the factor of 10.

7. Method according to claim 5 or 6,
**characterized in that**
the translation ratio of the superimposed steering system, when deactivated, is increased to an initial value.

8. Method according to any of claims 5 to 7,
**characterized in that**
the steering wheel angle is used as an input variable for the prediction of the travel path of the motor vehicle.

## Revendications

1. Assistant de suivi de voie pour un véhicule automobile, lequel peut être activé et désactivé et qui permet une intervention de direction sur un essieu au moyen d'une direction à superposition,
**caractérisé en ce**
**que** l'assistant de suivi de voie est réalisé pour, dans l'état activé, réduire le rapport de démultiplication de la direction à superposition d'un facteur compris entre 5 et 15.

2. Assistant de suivi de voie selon la revendication 1,
**caractérisé en ce**
**que**, dans l'état activé, le rapport de démultiplication de la direction à superposition peut être réduit approximativement du facteur 10.

3. Assistant de suivi de voie selon la revendication 1 ou 2,
**caractérisé en ce**
**qu'**il est réalisé pour, dans l'état désactivé, augmenter le rapport de démultiplication de la direction à superposition à une valeur initiale.

4. Assistant de suivi de voie selon l'une quelconque des revendications précédentes, **caractérisé en ce**
**que** l'angle de volant de direction est disponible en tant que grandeur d'entrée pour prévoir la trajectoire du véhicule automobile.

5. Procédé pour le fonctionnement d'un assistant de suivi de voie pour un véhicule automobile, lequel peut être activé et désactivé et qui permet une intervention de direction sur un essieu au moyen d'une direction à superposition,
**caractérisé en ce**
**que** l'assistant de suivi de voie réduit, dans l'état activé, le rapport de démultiplication de la direction à superposition d'un facteur compris entre 5 et 15.

6. Procédé selon la revendication 5,
**caractérisé en ce**
**que** le rapport de démultiplication de la direction à superposition est réduit, dans l'état activé, approximativement du facteur 10.

7. Procédé selon la revendication 5 ou 6,
**caractérisé en ce**
**que** le rapport de démultiplication de la direction à superposition est augmenté, dans l'état désactivé, à une valeur initiale.

8. Procédé selon l'une quelconque des revendications 5 à 7,
**caractérisé en ce**
**que** l'angle de volant de direction est utilisé en tant que grandeur d'entrée pour prévoir la trajectoire du véhicule automobile.
